# NEUE EUROPÄISCHE PATENTSCHRIFT

(11) **EP 3 857 177 B2**
(45) Veröffentlichungstag und Bekanntmachung des Hinweises auf die Entscheidung über den Einspruch: **09.09.2026**
(45) Hinweis auf die Patenterteilung: 06.09.2023
(21) Anmeldenummer: 19779430.8
(22) Anmeldetag: 24.09.2019
(51) Int. Cl.: G01F 1/7086, G01P 5/22, G01F 1/712, G01F 1/704

(54) **VERFAHREN UND VORRICHTUNG ZUM MESSEN EINER STRÖMUNGSGESCHWINDIGKEIT EINES GASSTROMS**
METHOD AND DEVICE FOR MEASURING A FLOW VELOCITY OF A GAS STREAM
PROCÉDÉ ET DISPOSITIF DE MESURE D'UNE VITESSE D'ÉCOULEMENT D'UN FLUX DE GAZ

(30) Priorität: 24.09.2018 DE 102018123448
(43) Veröffentlichungstag der Anmeldung: 04.08.2021
(73) Patentinhaber: Promecon Process Measurement Control GmbH, 39179 Barleben (DE)
(72) Erfinder: MÄDE, Matthias, 39167 Eichenbarleben (DE)
(74) Vertreter: Gramm, Lins & Partner Patent- und Rechtsanwälte PartGmbB
(86) Internationale Anmeldenummer: PCT/EP2019/075710
(87) Internationale Veröffentlichungsnummer: WO 2020/064731

(56) Entgegenhaltungen:
- EP-A1- 1 930 712
- EP-A1- 2 484 279
- EP-B1- 1 930 712
- WO-A1-02/077578
- WO-A1-2012/145829
- WO-A1-2012/145829
- DE-A1- 3 827 913
- US-A- 3 558 898
- US-A1- 2002 100 874
- US-A1- 2002 100 874
- US-A1- 2013 228 689
- US-B2- 7 880 133
- US-B2- 9 157 778
- J SMREKAR ET AL: "A cross-correlation optical velocimeter", MEASUREMENT SCIENCE AND TECHNOLOGY., IOP, BRISTOL., GB, vol. 18, no. 3, 1 March 2007 (2007-03-01), GB , pages 555 - 560, XP020118525, ISSN: 0957-0233, DOI: 10.1088/0957-0233/18/3/003
- MUNIR M.W. MUHAMMAD, KHALIL BUSHRA ANAM: "Cross Correlation Velocity Measurement of Multiphase Flow", INTERNATIONAL JOURNAL OF SCIENCE AND RESEARCH, UNIVERSITY OF AUCKLAND RESEARCH REPOSITORY, RESEARCHSPACE, vol. 4, no. 2, 1 January 2015 (2015-01-01), pages 802 - 807, XP093192492
- "The making, Shaping and Treating of Steel: Steelmaking and refining Volume, 11th edition", 1 June 1998, THE AISE STEEL FOUNDATION, article JONES J.A.T., ET AL: "Electric Furnace Steelmaking", pages: 1 - 136, XP093192579
- MACIEJ GAWLIKOWSKI;TADEUSZ PUSTELNY: "Investigations concerning the application of the cross-correlation method in cardiac output measurements", BIOMEDICAL ENGINEERING ONLINE, BIOMED CENTRAL LTD, LONDON, GB, vol. 11, no. 1, 20 May 2012 (2012-05-20), GB , pages 24, XP021136274, ISSN: 1475-925X, DOI: 10.1186/1475-925X-11-24
- REGO BARCENA SALVADOR, REGO BARCENA SALVADOR: "A passive mid-infrared sensor to measure real-time particle emissivity and gas temperature in coal -fired boilers and steelmaking furnaces", A THESIS SUBMITTED IN CONFORMITY WITH THE REQUIREMENTS FOR THE DEGREE OF DOCTOR OF PHILOSOPHY, PROQUEST DISSERTATIONS & THESES, 1 January 2008 (2008-01-01), pages 1 - 134, XP093192588
- IYER HARISH ET AL: "EAF Optimization Using Real-Time Heat and Mass Balances at Nucor Steel Seattle Inc", AISTECH 2017 PROCEEDINGS, 1 January 2017 (2017-01-01), pages 1 - 8, XP093192537
- SPENCER A. ET AL: "NextGen® Multipoint Offgas Analysis at Steel Dynamics Inc., Butler, IN", AISTECH 2017, 1 January 2017 (2017-01-01), pages 1 - 10, XP093192540
- GAO XIONG ET AL: "Evaluating the Improvement of Cross-Correlation–Based Flow Measurement by Periodic Fluid Injection", NUCLEAR TECHNOLOGY, AMERICAN NUCLEAR SOCIETY, CHICAGO, IL., US, vol. 207, no. 11, 2 November 2021 (2021-11-02), US , pages 1725 - 1745, XP093192542, ISSN: 0029-5450, DOI: 10.1080/00295450.2020.1831873
- JULIUSZ B. GAJEWSKI: "Accuracy of cross correlation velocity measurements in two-phase gas-solid flows", FLOW MEASUREMENT AND INSTRUMENTATION, vol. 30, 2013, XP028561200, DOI: 10.1016/j.flowmeasinst.2013.01.001
- REN RUI ET AL: "Design and Implementation of an Ultrasonic Flowmeter Based on the Cross-Correlation Method", SENSORS, MDPI, CH, vol. 22, no. 7470, CH , pages 1 - 21, XP093192547, ISSN: 1424-8220, DOI: 10.3390/s22197470
- MARTYNIUK P.; ROGALSKI A.: "HOT infrared photodetectors", OPTO-ELECTRONICS REVIEW, WARSZAWA,, PL, vol. 21, no. 2, 15 March 2013 (2013-03-15), PL , pages 239 - 257, XP035349474, ISSN: 1230-3402, DOI: 10.2478/s11772-013-0090-x

## Beschreibung

Die Erfindung betrifft ein Verfahren sowie eine Vorrichtung zum Messen einer Strömungsgeschwindigkeit eines Gasstroms.

Die Strömungsgeschwindigkeit von Gasen muss an vielen Stellen gemessen werden. Besonders herausfordernd ist diese Messaufgabe, wenn die Gase sehr heiß und/oder aggressiv sind. Bei hohen Temperaturen, beispielsweise oberhalb von 1000 °C, müssen temperaturfeste Materialien eingesetzt werden, was aufwändig ist. Aggressive Gase führen zu erhöhtem Verschleiß. Führt der Gasstrom beispielsweise Feststoffpartikel mit sich, beispielsweise Asche-, Kohle-, Schlacke-oder Zementpartikel, so kann es zu signifikant abrasivem Verschleiß am eingesetzten Messgerät kommen. Enthält das Gas beispielsweise oxidierende Bestandteile, so kann es zudem zu chemischem Verschleiß kommen. Trotz gegebenenfalls widriger Umweltbedingungen ist eine hohe Messgenauigkeit erwünscht, weil dadurch beispielsweise die Regelbarkeit der technischen Anlage, an der die Strömungsgeschwindigkeit gemessen wird, verbessert wird.

Es ist bekannt, Temperaturfluktuationen im Gasstrom an voneinander beabstandeten Stellen zu messen und mittels Kreuzkorrelation den zeitlichen Versatz der beiden Temperaturverläufe zu bestimmen. Aus dem Zeitversatz und dem Abstand der beiden Messstellen lässt sich die Strömungsgeschwindigkeit des Gasstroms bestimmen.

Nachteilig an diesen Verfahren zur Messung der Strömungsgeschwindigkeit ist, dass höchste Genauigkeiten nur schwer erreicht werden können.

Aus der DE 699 21 009 T2 ist ein optischer Durchflussmesser speziell für Erdgasleitungen bekannt, bei dem Streulicht an Teilchen gemessen wird. Ist die Teilchenkonzentration zu klein, werden weitere Teilchen zugegeben.

Aus der DE 38 27 913 A1 sind ein Verfahren und eine Vorrichtung zur Bestimmung der Geschwindigkeit einer Strömung bekannt, bei der Streulichtmessungen an Teilchen durchgeführt werden. Die jeweiligen Messorte sind voneinander beabstandet. Die Geschwindigkeit wird durch eine Korrelationsrechnung an den Messergebnissen erhalten.

Aus der US 9 157 778 B2 ist ein Verfahren zum Messen des Gasdurchflusses bekannt, bei dem die Absorption von Strahlung an zwei voneinander beabstandeten Messorten gemessen wird. Die Strömungsgeschwindigkeit wird berechnet, indem die Laufzeit einer Störung bestimmt wird. Diese Störung kann beispielsweise durch das Initiieren von Gas hervorgerufen werden.

Die WO 02 /077578 A1 beschreibt ein aktives Verfahren, bei dem von einer Lichtquelle emittiertes Licht vom Gasstrom teilweise absorbiert wird. Die Absorption wird an zwei voneinander beanstandeten Stellen gemessen und daraus die Strömungsgeschwindigkeit berechnet.

Die US 2013/0228689 A1 beschreibt ebenfalls ein aktives Verfahren, bei dem zusätzlich Veränderungen im Absorptionsmuster dadurch eingebracht werden, dass Verwirbelungen verursacht werden oder Gas in den zu vermessenden Gasstrom injiziert wird.

WO 2012/145829 A1 offenbart ein Verfahren zur Strömungsgeschwindigkeitsmessung eines Gases mit einer Temperatur von mehr als 1000°C, wobei ein zeitlicher IR-Strahlungsparameterverlaufs eines strömenden Gases von zwei, entlang einer Leitung in Strömungsrichtung angeordneten, voneinander beabstandeten Photodetektoren gemessen wird, und die Strömungsgeschwindigkeit durch Kreuzkorrelation der IR-Strahlungsparameterverläufe bestimmt wird.

Der Erfindung liegt die Aufgabe zugrunde, die Messung der Strömungsgeschwindigkeit eines Gasstroms zu verbessern.

Die Erfindung löst das Problem durch ein Verfahren mit den Merkmalen von Anspruch 1.

Gemäß einem zweiten Aspekt löst die Erfindung das Problem durch eine Vorrichtung mit den Merkmalen des unabhängigen Sachanspruchs.

Vorteilhaft an der Erfindung ist, dass die Strömungsgeschwindigkeit mit einer höheren Genauigkeit gemessen werden kann. Der Grund dafür ist, dass die photoelektrische Messung des IR-Strahlungsparameters absolut möglich ist, was beispielsweise mit einer pyrometrischen Messung in der Regel nur dann möglich ist, wenn der Emissionskoeffizient konstant ist, was oft nicht garantiert werden kann.

Schwarzkörperstrahlung kann beispielsweise von den Wänden einer Leitung, die den Gasstrom führt, oder von Partikeln im Gasstrom herrühren. Gase mit Anregungswellenlängen oberhalb von 1,5 µm absorbieren und re-emittieren in dem Wellenlängenbereich, der Hintergrund-Schwarzkörperstrahlung, sodass Schwankungen in den Gaskonzentrationen besonders ausgeprägt sind. Der zeitlich konstante Hintergrund ist beispielsweise bei einer Berechnung mittels Kreuzkorrelation unbeachtlich.

Wenn der IR-Strahlungsparameter bei einer Wellenlänge von höchstens 6 µm, insbesondere höchstens 5,3 µm, gemessen wird, kann eine besonders hohe Messgenauigkeit für die Strömungsgeschwindigkeit erreicht werden.

Die Erfindung beruht auf der Erkenntnis, dass lokale Fluktuationen oder Inhomogenitäten im IR-Strahlungsparameter für eine so lange Zeit ähnlich sind, dass sich diese Schwankungen mit der gleichen Geschwindigkeit bewegen wie der Gasstrom selbst. Diese Schwankungen können mehrere Ursachen haben. Zum einen kann es sich um thermische Schwankungen handeln, das heißt, dass die Temperatur des Gasstroms zu einem gegebenen Zeitpunkt räumlich inhomogen ist. Bewegt sich diese Inhomogenität mit der Strömungsgeschwindigkeit des Gasstroms, so kann aus den Temperaturschwankungen auf die Strömungsgeschwindigkeit geschlossen werden.

Wenn es sich bei dem Gas um ein Gemisch aus verschiedenen Gasen handelt, wenn also das Gas vorgesehen ein Gasgemisch ist, kann es zu Konzentrationsschwankungen der Gase kommen. Die räumliche Verteilung der Gaskonzentration hat sich als lokal stabiler herausgestellt als die Temperaturverteilung. Der Grund hierfür könnte sein, dass drei Mechanismen zum Ausgleich von Temperaturunterschieden bekannt sind, nämlich die Durchmischung, Wärmeleitung und Wärmestrahlung. Konzentrationsfluktuationen können hingegen nur durch Diffusion ausgeglichen werden. Die lokale Verteilung von Konzentrationsunterschiede ist daher zeitlich stabiler. Aus diesem Grund ähneln der erste IR-Strahlungsparameterverlauf und der zweite IR-Strahlungsparameterverlauf einander stärker, sodass die Berechnung der Laufzeit mit einer geringeren Messunsicherheit möglich ist.

Im Rahmen der vorliegenden Beschreibung wird unter dem IR-Strahlungsparameter ein Wert oder ein Vektor verstanden, der die Bestrahlungsstärke der elektromagnetischen Infrarotstrahlung angibt, die von der IR-Strahlung des Gasstroms in einem Messintervall hervorgerufen wird. Ändert sich die Dichte, die Temperatur und die Zusammensetzung des Gasstroms, so ändert sich auch der IR-Strahlungsparameter.

Der Gasstrom fließt in einer Leitung und der IR-Strahlungsparameter wird von einem Messort außerhalb der Leitung gemessen.

Die Messfrequenz beträgt vorzugsweise zumindest 1,5 Kilohertz, besonders bevorzugt zumindest 16 Kilohertz. Je höher die Messfrequenz ist, desto geringer wird in der Regel die Messunsicherheit, mit der die Laufzeit bestimmt wird. Allerdings waren der Steigerung der Messfrequenz bislang Grenzen gesetzt, da im Stand der Technik nur pyorometrische Messungen verwendet werden, aber keine photoelektrischen.

Vorzugsweise wird der Strahlungsparameter zwar analog gemessen, danach aber digitalisiert, wobei die Bit-Tiefe vorzugsweise 16 Bit beträgt.

Der Gasstrom ist ein Strom einer Gasmischung, die ein erstes Gas und zumindest ein zweites Gas enthält, wobei das erste Gas eine Erstgas-Anregungswellenlänge aufweist und wobei der IR-Strahlungsparameter eine Bestrahlungsstärke eines IR-Strahlungssensors bei der Erstgas-Anregungswellenlänge ist. Bei dem ersten Gas kann es sich beispielswiese um Wasserdampf, Distickstoffoxid, Methan, Kohlendioxid, Kohlenmonoxid, Schwefeldioxid oder Schwefeltrioxid, NOx, H₂S, HF, NH₃ und alle IR-aktiven Moleküle handeln. Das zweite Gas ist ein anderes Gas als das erste Gas und ebenfalls beispielsweise Wasserdampf, Distickstoffoxid, Methan, Kohlendioxid, Kohlenmonoxid, Schwefeldioxid oder Schwefeltrioxid.

Unter dem Merkmal, das der IR-Strahlungsparameter eine Bestrahlungsstärke bei der Erstgas-Anregungswellenlänge ist wird insbesondere verstanden, dass eine Änderung der Konzentration des ersten Gases unter sonst gleichen Bedingungen zu einer Änderung des IR-Strahlungsparameters führt. Vorzugsweise werden Strahlungsanteile herausgefiltert, die außerhalb eines vorgegebenen Messintervalls liegen, das die Erstgas-Anregungswellenlänge enthält. Vorzugsweise ist die Intervallbreite dieses Messintervalls kleiner als 0,5 µm, vorzugsweise kleiner als 0,4 µm.

Das zweite Gas hat eine Zweitgas-Anregungswellenlänge und das Verfahren umfasst die Schritte (a) zeitabhängiges Erfassen eines zweiten IR-Strahlungsparameters in Form einer Bestrahlungsstärke bei der Zweitgas-Anregungswellenlänge an der ersten Messstelle, sodass ein erster Bestrahlungsstärkeverlauf erhalten wird, (b) zeitabhängiges Erfassen des zweiten IR-Strahlungsparameters an der zweiten Messstelle, sodass ein zweiter Bestrahlungsstärkeverlauf erhalten wird, (c) Berechnen einer zweiten Laufzeit zwischen den Bestrahlungsstärkeverläufen, insbesondere mittels Kreuzkorrelation, und (d) Berechnen der Strömungsgeschwindigkeit aus der ersten Laufzeit und der zweiten Laufzeit. In anderen Worten werden die Laufzeiten anhand von zwei unterschiedlichen Konzentrationsfluktuationen gemessen. Das hat den Vorteil, dass die Messunsicherheit weiter gesenkt werden kann.

Vorzugsweise wird IR-Strahlung des Gasstroms, die nicht innerhalb eines vorgegebenen Messintervalls von beispielsweise ± 0,3 µm um die Erstgas-Anregungswellenlänge liegt oder innerhalb eines vorgegebenen Intervalls von ± 0,3 µm um die Zweitgas-Anregungswellenlänge liegt, herausgefiltert. Besonders bevorzugt wird IR-Strahlung herausgefiltert, die nicht in vorgegebenen Intervallen von ± 0,2 µm um die jeweilige Anregungswellenlänge liegen. Vorteilhaft hieran ist, dass die Messunsicherheit weiter reduziert werden kann, weil es zu weniger Überlagerungen mit anderweitig fluktuierenden Strahlungsanteilen kommt, die zu einem Mittelungseffekt führen können.

Die Temperatur des Gasstroms beträgt zumindest 1000 °C. Bei hohen Temperaturen zeigen sich die Vorteile der Erfindung besonders deutlich.

Zum Messen des IR-Strahlungsparameters wird vorzugsweise ein Indium-Arsen-Antimonid-Detektor verwendet. Alternativ oder zusätzlich kann ein Quecksilber-Cadmium-Tellurit-Detektor verwendet werden.

Bei einer erfindungsgemäßen Vorrichtung liegt der Messbereich der IR-Strahlungssensoren zwischen 1,5 und 6 µm.

Günstig ist es, wenn die Auswerteeinheit eingerichtet ist zum automatischen Durchführen eines erfindungsgemäßen Verfahrens. Hierunter ist zu verstehen, dass die Auswerteeinheit ohne menschlichen Eingriff das Verfahren selbsttätig durchführt.

Günstig ist es, wenn die Vorrichtung eine Leitung zum Leiten des Gasstroms aufweist, wobei der erste IR-Strahlungssensor und der zweite IR-Strahlungssensor zum Erfassen von IR-Strahlung außerhalb der Leitung angeordnet sind. Insbesondere sind die IR-Strahlungssensoren außerhalb der Leitung angeordnet. Wenn die Temperatur des Gasstroms beim Betrieb der Vorrichtung größer ist als 200 °C, so sind die IR-Strahlungssensoren vorzugsweise soweit vom Gasstrom beabstandet angeordnet, dass die Temperatur dort höchstens 100°C, vorzugsweise höchstens 80°C, beträgt. Die Beabstandung der IR-Strahlungssensoren vom Gasstrom hat zudem den Vorteil, dass der chemische und/oder Abrasionsverschleiß vernachlässigbar klein werden kann.

Vorzugsweise besitzt die erfindungsgemäße Vorrichtung (a) eine erste Messleitung, die quer zur Leitung des Gasstroms verläuft und die ausgebildet zum Leiten eines ersten IR-Strahlungsbündels vom Gasstrom zum ersten IR-Strahlungssensor, (b) eine zweite Messleitung, die quer zur Leitung verläuft und die ausgebildet ist zum Leiten eines zweiten IR-Strahlungsbündels vom Gasstrom zum zweiten IR-Strahlungssensor, wobei die Messleitungen so angeordnet sind, dass die IR-Strahlungsbündel einen Fehlausrichtungswinkel φ von höchstens 45°, insbesondere höchstens höchstens 20 °, vorzugsweise höchstens 10 °, miteinander bilden. Auf diese Weise ähneln sich die Turbulenzmuster an der ersten Messstelle und an der zweiten Messstelle besonders stark, sodass eine geringe Messunsicherheit der Strömungsgeschwindigkeit erreichbar ist.

Vorzugsweise sind die IR-Strahlungssensoren unterhalb einer Wellenlänge von 1,5 µm nicht sensitiv. Hierunter wird verstanden, dass die spektrale Empfindlichkeit unterhalb dieser Wellenlänge höchstens ein Dritt, insbesondere höchstens ein Zehntel, der maximalen spektralen Empfindlichkeit beträgt. Die spektrale Empfindlichkeit wird beispielsweise in Ampere pro Watt angegeben.

Es sind die IR-Strahlungssensoren zudem oberhalb von 15 µm, vorzugsweise oberhalb von 5,5 µm, nicht mehr sensitiv. Im Wellenlängenintervall zwischen 1,5 und 6 µm liegen Vibrations-Anregungswellenlängen häufig vorkommender Gase, wie beispielsweise Kohlendioxid, Kohlenmonoxid und Wasser. Gleichzeitig ist, wie oben angesprochen, die Schwarzkörper-Hintergrundstrahlung hinreichend intensiv, um ein gutes Signal-zu-Rausch-Verhältnis zu erhalten.

Vorzugsweise sind die IR-Strahlungssensoren so angeordnet, dass ein maximaler Durchmesser des IR-Strahlungsbündels höchstens 200 Millimeter beträgt. Je kleiner der Durchmesser des IR-Strahlungsbündels ist, desto weniger werden Fluktuationen gemittelt und desto stärker fluktuiert das Signal. Günstig ist es, wenn der minimale Durchmesser des IR-Strahlungsbündels zumindest 1 Millimeter beträgt. Wird der Durchmesser IR-Strahlungsbündels zu klein, verschlechtert sich das Signal-zu-Rausch-Verhältnis.

Vorzugsweise ist (a) der erste IR-Strahlungssensor so angeordnet, dass das erste IR-Strahlungsbündel in einer ersten Geraden verläuft, (b) der zweite IR-Strahlungssensor so angeordnet, dass das zweite IR-Strahlungsbündel entlang einer zweiten Geraden verläuft und das eine Strecke minimalen Abstands zwischen beiden Geraden sich in Strömungsrichtung erstreckt. Der Abstand zwischen den beiden Geraden ist der Messabstand. Der Messabstand beträgt vorzugsweise zumindest 50 bis1000 Millimeter, insbesondere höchstens 600. Günstig ist es zudem, wenn der Messabstand höchstens 600 Millimeter beträgt.

Besonders günstig ist es, wenn die beiden Geraden im technischen Sinne parallel verlaufen, das heißt, dass idealerweise eine Parallelität im mathematischen Sinne günstig, in der Regel aber nicht zu erreichen ist. Abweichungen von beispielswiese ± 5 ° sind daher tolerierbar.

Entspricht der Mess-Abstand zwischen den beiden Geraden zumindest dem Quotienten aus der Strömungsgeschwindigkeit und 1000 Hertz und/oder höchstens dem Quotienten aus der Strömungsgeschwindigkeit und 100 Hertz, ist die Messunsicherheit bei der Bestimmung der Strömungsgeschwindigkeit aufgrund der Unsicherheit bei der Laufzeit bereits sehr gering. Zudem ist die Unsicherheit, die durch eine Veränderung des Inhomogenitätsmusters hervorgerufen wird, noch nicht zu groß, um die Messunsicherheit zu stark negativ zu beeinflussen.

Vorzugsweise ragt die Vorrichtung nicht in die Leitung. Hierunter ist insbesondere zu verstehen, dass kein Teil der Vorrichtung mehr als ein Zehntel in den Querschnitt der Leitung hineinragt. Systeme aus dem Stand der Technik besitzen oft Lanzen, die im Gasstrom Verwirbelungen erzeugen. Nachteilig daran ist, dass das zu einem Verlust an Strömungsgeschwindigkeit und damit zu einem Verlust an Wirkungsgrad der überwachten Anlage führt. In anderen Worten werden die IR-Strahlungsparameter vorzugsweise an einem ungestörten oder nicht aktiv gestörten Gasstrom gemessen.

Im Folgenden wird die Erfindung anhand der beigefügten Zeichnungen näher erläutert. Dabei zeigt
- Figur 1: eine erfindungsgemäße Vorrichtung zum Durchführen eines erfindungsgemäßen Verfahrens gemäß einer ersten Ausführungsform und
- Figur 2: eine erfindungsgemäße Vorrichtung zum Durchführen eines erfindungsgemäßen Verfahrens gemäß einer zweiten Ausführungsform.
- Figur 3: zeigt eine erfindungsgemäße Vorrichtung zum Durchführen eines erfindungsgemäßen Verfahrens gemäß einer dritten Ausführungsform.

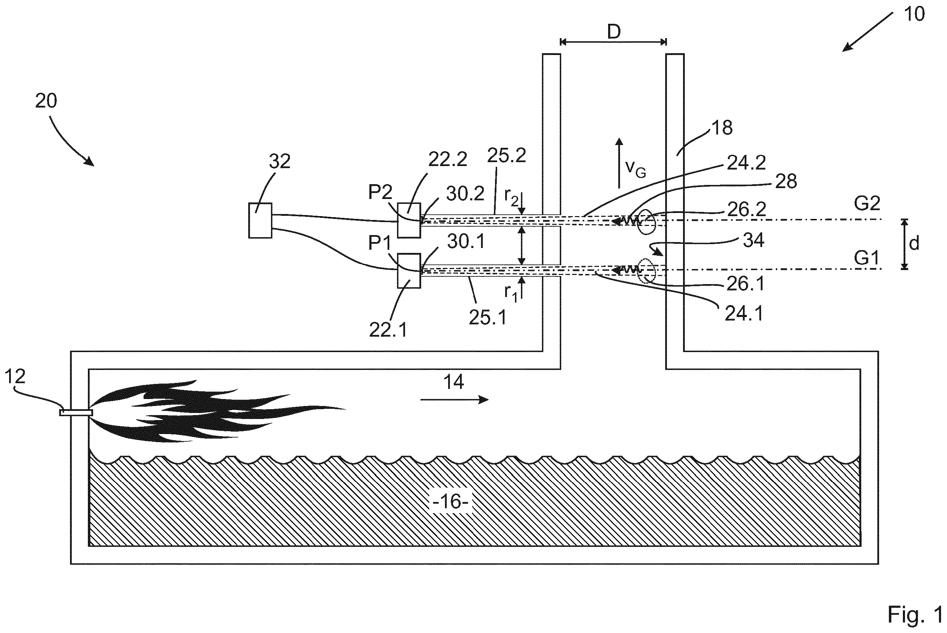

Figur 1 zeigt eine Feuerungsanlage 10, bei der durch Verbrennen oder andere exotherme Prozesse oder externe Wärmezufuhr eines Brennstoffs mittels eines Brenners 12 ein Gasstrom 14, im vorliegenden Fall in Form eines Abgasstroms, erzeugt wird. Eine Temperatur T des Gasstroms 14 liegt beispielsweise bei über T = 1400 °C. Die Feuerungsanlage 10 kann, wie im vorliegenden Fall, eine Vorrichtung zum Beheizen eines Metallbades oder Glasbades 16 sein. Die Feuerungsanlage kann aber beispielsweise auch Teil eines Kraftwerks oder Zementwerks sein. Ein Ofen, Kraftwerk oder Zementwerk mit einer erfindungsgemäßen Messvorrichtung ist ebenfalls ein Gegenstand der vorliegenden Erfindung. Der Gasstrom 14 verläuft durch eine Leitung 18.

Figur 1 zeigt zudem eine Messvorrichtung 20 zum Messen einer Strömungsgeschwindigkeit vG des Gasstroms 14. Bei der Strömungsgeschwindigkeit vG handelt es sich um die mittlere Strömungsgeschwindigkeit, die durch Multiplizieren mit einer Querschnittsfläche A der Leitung 18 den Volumenstrom an Gas ergibt. Im vorliegenden Fall ist die Leitung 18 kreisförmig, sodass die Querschnittsfläche sich zu A=πD²/4 ergibt.

Die Messvorrichtung 20 umfasst einen IR-Strahlungssensor 22.1 und einen zweiten IR-Strahlungssensor 22.2. Der erste IR-Strahlungssensor 22 ist zum Erfassen eines ersten IR-Strahlungsbündels 24.1 angeordnet, das sich durch eine Messleitung 25.1 ausbreitet.

Emittiert ein schematisch eingezeichnetes Molekül 26.1, das sich im ersten IR-Strahlungsbündel 24.1 befindet, ein IR-Photon 28, das sich im ersten IR-Strahlungsbündel 24.1 auf den ersten IR-Strahlungssensor 22.1 zu bewegt, so trifft dieses auf ein Sensorelement 30.1 in Form eines InAsSb-Fotodetektors, der daraufhin eine Spannung generiert. Die vom Sensorelement 30.1 generierte Fotospannung U₁ hängt damit von der Bestrahlungsstärke der Strahlung ab, die auf das Sensorelement 30.1 fällt. Das Sensorelement 30.1 ist von der Leitung 18 beabstandet angeordnet.

Die Messleitung 25.1 ragt nicht in die Leitung 18 hinein, sodass die Bildung von zusätzlichen Turbulenzen weitgehend ausgeschlossen ist.

Das Sensorelement 30.1 hat einen Messbereich M =[λₘᵢₙ,λₘₐₓ] mit einer unteren Grenzwellenlänge λₘᵢₙ und einer oberen Grenzwellenlänge *λ_{max.}* Im vorliegenden Fall gilt λₘᵢₙ=0,78 µm und *λₘₐₓ*= 5,3 µm.

Der IR-Strahlungssensor 22.1 misst einen IR-Strahlungsparameterverlauf E_{g1,1}(t) in Abhängigkeit von der Zeit t mit einer Messfrequenz fₘₑₛₛ von zumindest 1 kHz, im vorliegenden Fall von fₘₑₛₛ = 16 kHz. Günstig ist es, wenn die Messfrequenz fₘₑₛₛ höchstens 1 MHz beträgt. Die analogen Roh-Daten werden von einem Analog-Digital-Wandler des Strahlungssensors 22.1 in digitale Werte umgewandelt. Die Bit-Tiefe der Abtastung beträgt 8 bis 24, vorzugsweise 16 bit.

Der zweite IR-Strahlungssensor 22.2 ist ausgebildet zum Messen von Strahlung aus einem IR-Strahlungsbündel 24.2, das sich in einer zweiten Messleitung 25.2 ausbreitet. Die IR-Strahlung des zweiten IR-Strahlungsbündels 24.2 kommt beispielsweise von einem zweiten Molekül 26.2. Das erste IR-Strahlungsbündel 24.1 erstreckt sich entlang einer ersten Geraden G1, der zweite IR-Strahlungsbündel 24.2 erstreckt sich entlang einer zweiten Geraden G2. Die beiden Geraden G1, G2 haben einen Messabstand d voneinander. Vorzugsweise verlaufen sie, wie im vorliegenden Fall gezeigt, parallel zueinander.

Der Messabstand d beträgt vorzugsweise höchstens 500 Millimeter, beispielsweise 350 ± 50 Millimeter.

Die Fotospannungen U₁, U₂, die von jeweiligen Sensorelementen 30.1, 30.2 generiert werden, werden an eine Auswerteeinheit 32 geleitet. Die Fotospannung U₁ ist ein Maß für eine Bestrahlungsstärke E₁, die vom Sensorelement 30.1. gemessen wird und stellt einen IR-Strahlungsparameter dar. Die Bestrahlungsstärke E₂ wird vom zweiten Sensorelement 30.2 gemessen und ist ebenfalls zeitabhängig.

Die Auswerteeinheit 32 berechnet eine Laufzeit τ als diejenige Zeit, bei der die Kreuzkorrelationsfunktion *R_{E1,E2}(τ')* = E₁⊗E₂(τ') maximal wird, wobei ^{®} das Operatorsymbol für die Kreuzkorrelation ist.

Schwankt im Abgasstrom 14 eine lokale Konzentration c eines ersten Gases g1, beispielsweise Methan, Wasser, Kohlendioxid, Kohlenmonoxid, Schwefeltrioxid, Schwefeldioxid oder Distickstoffoxid, so führt dies zu einer Änderung der Bestrahlungsstärke E_{g1,1}, wenn die entsprechende Fluktuation sich durch den Bereich des ersten IR-Strahlungsbündels 24.1 bewegt. Für räumliche Inhomogenitäten der Konzentration bleibt über den Messabstand d weitgehend konstant, sodass sich auf dem ersten Sensorelement 30.1 und auf dem Sensorelement 30.2 ähnliche Verläufe der jeweiligen Bestrahlungsstärken E_{g1,1}(t) und E_{g1,2}(t) ergeben.

Schwarzkörperstrahlung, die von einer Wand 34 in der Leitung 18 ausgeht, stört diese Messung nicht. Wird beispielsweise als ein erstes Gas H₂O gewählt, so hat dieses eine Erstgas-Anregungswellenlänge λ_{g1} von 3,2 µm. Es ist in diesem Fall günstig, wenn die IR-Strahlungssensoren 22.1, 22.2 ein Messintervall von M=[λ_{g1} - 0,3 µm, λ_{g1} +0,3µm] haben.

Wenn, wie gemäß einer bevorzugten Ausführungsform vorgesehen, ein zweites Gas g2 ausgewählt wird, dessen Zweitgas-Anregungswellenlänge λ_{g2} nicht im Messintervall M für das erste Gas g1 liegt, kann häufig die Messgenauigkeit erhöht werden. Beispielsweise kann als zweites Gas Kohlendioxid verwendet werden, dessen Zeitgas-Anregungswellenlänge beiλ_{g2}= 4,27 µm liegt.

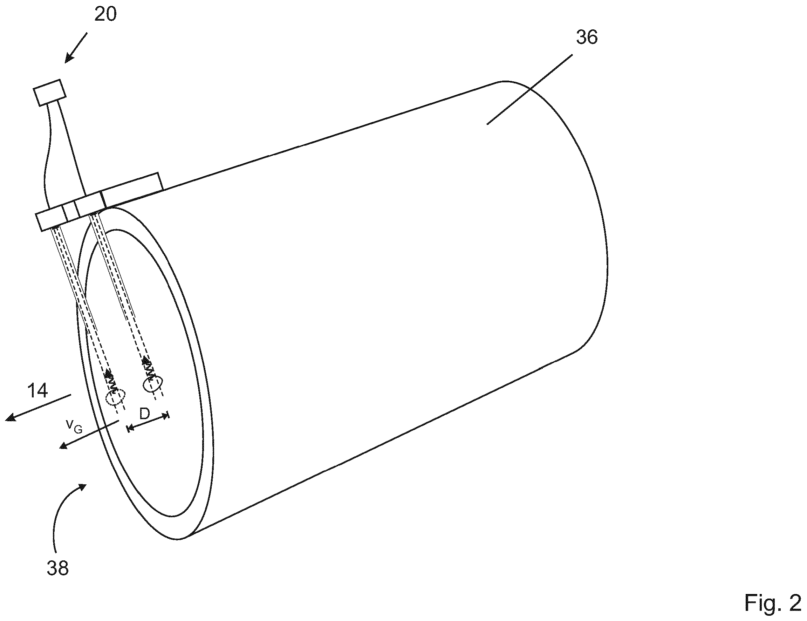

Figur 2 zeigt schematisch ein Strahltriebwerk 36, an dem die Messvorrichtung 20 so angeordnet ist, dass der Gasstrom 14, der in diesem Fall aus dem Strahltriebwerk 36 durch eine Ausströmöffnung 38 austritt, vermessen wird.

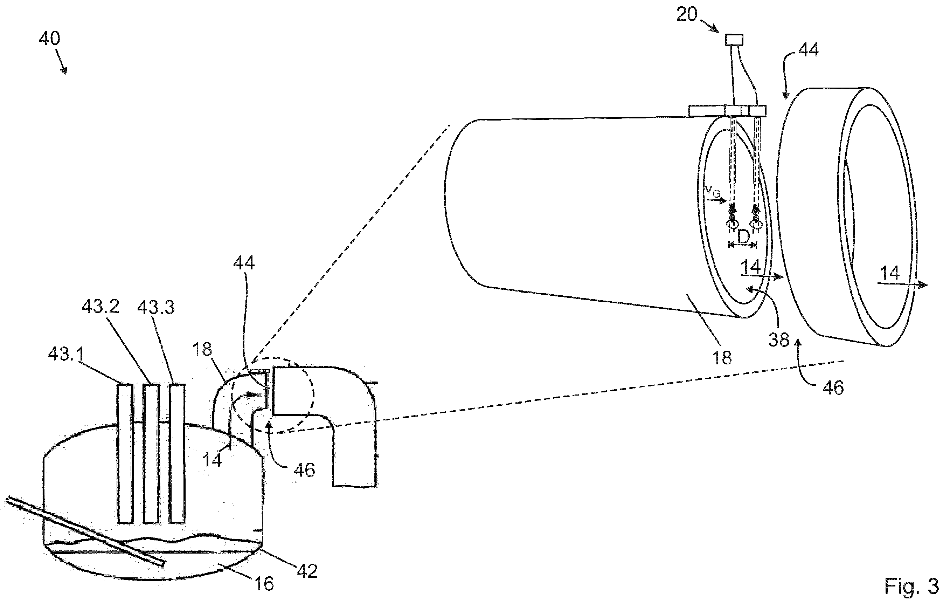

Figur 3 zeigt schematisch einen Teil eines Lichtbogenofens 40 mit einem Schmelzgefäß 42, in dem mittels eines Lichtbogens zwischen Elektroden 43.1, 43.2, 43.3 Stahlschrott geschmolzen wird, sodass das Metallbad 16 entsteht. Rechts im Bild ist eine Vergrößerung des Bereichs zu sehen, der gestrichelt umrandet ist. Beim Schmelzen entstehende Abgase bilden den Gasstrom 14 und werden durch die Leitung 18 abgeführt. Die Leitung 18 hat einen Ringspalt 44, durch den zusätzlich Luft 46 in die Leitung 18 eintreten kann. Um den Gasstrom 14 zu vermessen, ist die Messvorrichtung 20 spaltseitig an der Leitung 18 angeordnet.

**Bezugszeichenliste**

| | | | |
|---|---|---|---|
| 10 | Feuerungsanlage | | |
| 12 | Brenner | A | Querschnittsfläche |
| 14 | Gasstrom | c | Konzentration |
| 16 | Metallbad | D | Durchmesser |
| 18 | Leitung | d | Messabstand |
| | | E | Bestrahlungsstärke |
| 20 | Messvorrichtung | E(t) | IR-Strahlungsparameterverlauf |
| 22 | IR-Strahlungssensor | | |
| 24 | IR-Strahlungsbündel | fₘₑₛₛ | Messfrequenz |
| 25 | Messleitung | f_{g1} | Erstgas-Anregungswellenlänge |
| 26 | Molekül | f_{g2} | Zweitgas-Anregungswellenlänge |
| 28 | IR-Photon | M | Messintervall, Messbereich |
| | | vG | Strömungsgeschwindigkeit |
| 30 | Sensorelement | T | Temperatur |
| 32 | Auswerteeinheit | t | Zeit |
| 34 | Wand | U₁ | Fotospannung |
| 36 | Strahltriebwerk | | |
| 38 | Ausströmöffnung | | |
| 40 | Lichtbogenofen | | |
| 42 | Schmelzgefäß | | |
| 43 | Elektrode | | |
| 44 | Ringspalt | | |
| 46 | Luft | | |
| λₘᵢₙ | obere Grenzwellenlänge | | |
| λₘₐₓ | untere Grenzwellenlänge | | |
| λ_{g1} | Erstgas-Anregungswellenlänge | | |
| λ_{g2} | Zweitgas-Anregungswellenlänge | | |
| τ | Laufzeit | | |

## Patentansprüche

1. Verfahren zum Messen einer Strömungsgeschwindigkeit (v) eines Gasstroms (14), der
ein Strom einer Gasmischung ist, die ein erstes Gas (g1) und zumindest ein zweites Gas (g2) enthält,
wobei das erste Gas (g1) eine Erstgas-Anregungswellenlänge (λ_{g1}) aufweist und wobei das zweite Gas (g2) eine Zweitgas-Anregungswellenlänge (λ_{g2}) aufweist, mit den Schritten:
(a) zeitaufgelöstes Messen eines IR-Strahlungsparameters (E) an einer ersten Messstelle (P1) außerhalb des Gasstroms (14), sodass ein erster IR-Strahlungsparameterverlauf (E_{g1,1}(t)) erhalten wird,
(b) zeitaufgelöstes Messen des IR-Strahlungsparameters (E) an einer zweiten Messstelle (P2) außerhalb des Gasstroms (14), sodass ein zweiter IR-Strahlungsparameterverlauf (E_{g1,2}(t)) erhalten wird,
(c) Berechnen einer Laufzeit (τ1) aus dem ersten IR-Strahlungsparameterverlauf (E _{g1,1}(t)) und dem zweiten IR-Strahlungsparameterverlauf (E _{g1,2}(t)) mittels Kreuzkorrelation und
(d) Berechnen der Strömungsgeschwindigkeit (vG) aus der Laufzeit (τ1),
**dadurch gekennzeichnet, dass**
(e) der Gasstrom
in einer Leitung geführt wird, deren Wände Schwarzkörperstrahlung emittieren und
Partikel enthält, die Schwarzkörperstrahlung emittieren,
(f) der IR-Strahlungsparameter (E_{g1}) bei einer Wellenlänge (λ_{g1}) von zumindest 1,5 µm und höchstens 6 µm photoelektrisch gemessen wird,
(g) eine Messfrequenz (f) zumindest 16 Kilohertz beträgt,
(h) der IR-Strahlungsparameter die Bestrahlungsstärke von IR-Strahlung des Gasstroms (14) angibt und eine Bestrahlungsstärke (E_{g1}) bei der Erstgas-Anregungswellenlänge (λ_{g1}) ist,
(i) die Temperatur (T) des Gasstroms (14) zumindest 1000°C beträgt und
(j) das Verfahren die folgenden Schritte hat:
• zeitabhängiges Erfassen eines zweiten IR-Strahlungsparameters (E_{g2}) in Form einer Bestrahlungsstärke bei der Zweitgas-Anregungswellenlänge (λ_{g2}) an der ersten Messstelle (P1), sodass ein erster Bestrahlungsstärkeverlauf (E_{g2,1}(t)) erhalten wird,
• zeitabhängiges Erfassen des zweiten IR-Strahlungsparameters (E_{g2}) an der zweiten Messstelle (P2), sodass ein zweiter Bestrahlungsstärkeverlauf (E_{g2,2}(t)) erhalten wird,
• Berechnen einer zweiten Laufzeit (τ₂) zwischen den Bestrahlungsstärkeverläufen (E_{g2,1}(t)) (E_{g2,2}(t)) mittels Kreuzkorrelation und
• Berechnen der Strömungsgeschwindigkeit (vG) aus der ersten Laufzeit (τ₁) und der zweiten Laufzeit (τ₂).

2. Verfahren nach Anspruch 1, **gekennzeichnet durch** die Schritte:
Herausfiltern von IR-Strahlung des Gasstroms (14), die nicht innerhalb eines vorgegebenen ersten Messintervalls (M_{g1}) von 0,3 µm um die Erstgas-Anregungswellenlänge (λ_{g1}) oder
eines zweiten Messintervalls (M_{g2}) von 0,3 µm um die Zweitgas-Anregungswellenlänge (λ_{g2}) liegt.

3. Verfahren nach einem der vorstehenden Ansprüche, **dadurch gekennzeichnet, dass**
(a) eine erste Messleitung, die quer zur Leitung des Gasstroms verläuft, ein erstes IR-Strahlungsbündels vom Gasstrom zum ersten IR-Strahlungssensor leitet, und
(b) eine zweite Messleitung, die quer zur Leitung verläuft, ein zweites IR-Strahlungsbündels vom Gasstrom zum zweiten IR-Strahlungssensor leitet, wobei die Messleitungen so angeordnet sind, dass die IR-Strahlungsbündel einen Fehlausrichtungswinkel *φ* von höchstens 10° miteinander bilden und wobei die IR-Strahlungssensoren (22.1, 22.2) so angeordnet sind, dass ein maximaler Durchmesser der IR-Strahlungsbündel höchstens 200 Millimeter und zumindest 1 Millimeter beträgt und
(c) wobei die IR-Strahlungssensoren soweit vom Gasstrom beabstandet angeordnet sind, dass Temperatur dort höchstens 100°C beträgt.

4. Vorrichtung zum Messen einer Strömungsgeschwindigkeit eines Gasstroms (14), mit
(a) einem ersten IR-Strahlungssensor (22.1) zum zeitaufgelösten Messen eines IR-Strahlungsparameters (E_{g1}) von IR-Strahlung des Gasstroms (14) zum Erhalten eines ersten IR-Strahlungsparameterverlaufs (E_{g1,1}(t)) an einer ersten Messstelle (P1) außerhalb des Gasstroms (14) und zum zeitabhängigen Erfassen eines zweiten IR-Strahlungsparameters (E_{g2}) in Form einer Bestrahlungsstärke bei einer Zweitgas-Anregungswellenlänge (λ_{g2}) an der ersten Messstelle, sodass ein erster Bestrahlungsstärkeverlauf (E_{g2,1}(t)) erhalten wird,
(b) einem zweiten IR-Strahlungssensor (22.2) zum zeitaufgelösten Messen des IR-Strahlungsparameters (E_{g1}) von IR-Strahlung des Gasstroms (14) zum Erhalten eines zweiten IR-Strahlungsparameterverlaufs (E_{g1,2}(t)) und zum zeitabhängigen Erfassen des zweiten IR-Strahlungsparameters (E_{g2}) an der zweiten Messstelle, sodass ein zweiter Bestrahlungsstärkeverlauf (E_{g2,2}(t)) erhalten wird,
(c) einer Auswerteeinheit (32), die ausgebildet ist zum automatischen
- Berechnen einer Laufzeit (τ1) zwischen dem ersten IR-Strahlungsparameterverlauf (E_{g1,1}(t)) und dem zweiten IR-Strahlungsparameterverlauf (E_{g1,2}(t)) mittels Kreuzkorrelation und
- Berechnen der Strömungsgeschwindigkeit (vG) aus der Laufzeit (τ1),
(d) wobei die IR-Strahlungssensoren (22.1, 22.2) photoelektrische IR-Strahlungssensoren (22.1, 22.2) sind,
**dadurch gekennzeichnet, dass**
(e) die IR-Strahlungssensoren (22) einen Messbereich M haben, dessen untere Grenzwellenlänge (λₘᵢₙ) zumindest 0,78 µm beträgt und eine Messfrequenz (fₘₑₛₛ) von zumindest 16 Kilohertz haben,
(f) eine obere Grenzwellenlänge (λₘₐₓ) des Messbereichs (M) höchstens 15 µm beträgt und
(g) die Auswerteeinheit (32) eingerichtet ist zum automatischen Durchführen eines Verfahrens nach einem der Ansprüche 1 bis 3.

5. Vorrichtung nach Anspruch 4, **gekennzeichnet durch**
(a) eine erste Messleitung, die quer zur Leitung des Gasstroms verläuft und die ausgebildet zum Leiten eines ersten IR-Strahlungsbündels vom Gasstrom zum ersten IR-Strahlungssensor, und
(b) eine zweite Messleitung, die quer zur Leitung verläuft und die ausgebildet ist zum Leiten eines zweiten IR-Strahlungsbündels vom Gasstrom zum zweiten IR-Strahlungssensor,
(c) wobei die Messleitungen so angeordnet sind, dass die IR-Strahlungsbündel einen Fehlausrichtungswinkel *φ* von höchstens 10° miteinander bilden und
(d) wobei die IR-Strahlungssensoren (22.1, 22.2) so angeordnet sind, dass ein maximaler Durchmesser der IR-Strahlungsbündel höchstens 200 Millimeter und zumindest 1 Millimeter beträgt.

## Claims

1. A method for measuring a flow velocity (v) of a gas stream (14) wherein the gas stream (14) is a stream of a gas mixture that contains a first gas (g1) and at least a second gas (g2), and wherein the first gas (g1) has a first gas excitation wavelength (λ_{g1}) and wherein the second gas (g2) has a second gas excitation wavelength (λ_{g2}),
the method comprising the steps:
(a) time-resolved measurement of an IR radiation parameter (E) of IR radiation of the gas stream (14) at a first measurement point (P1) outside of the gas stream (14), thereby obtaining a first IR radiation parameter curve (Eg_{1,1}(t)),
(b) time-resolved measurement of an IR radiation parameter (E) at a second measurement point (P2) outside of the gas stream (14), thereby obtaining a second IR radiation parameter curve (E_{g1,2}(t)),
(c) calculation of a transit time (τ1) from the first IR radiation parameter curve (E _{g1,1}(t)) and the second IR radiation parameter curve (E _{g1,2}(t)), by means of cross-correlation, and
(d) calculation of the flow velocity (vG) from the transit time (τ1),
**characterised in that**
(e) the gas stream (14) is conducted in a pipe and contains particles, both the wall and the particles emitting black body radiation,
(f) the IR radiation parameter (E _{g1}) is measured photoelectrically at a wavelength (λ_{g1}) of at least 1,5 µm and at most 6 µm,
(g) a measurement frequency (f) is at least 16 kilohertz,
(h) the IR radiation parameter is (E) an irradiance (E_{g1}) of the IR radiation of the gas stream (14) and an irradiance (E_{g1}) at the first gas excitation wavelength (λ_{g1}),
(i) the temperature (T) of the gas stream (14) is at least 1000°C and
(i) the method comprises the following steps:
• time-resolved detection of a second IR radiation parameter (E_{g2}) in the form of an irradiance at the second gas excitation wavelength (λ_{g2}) at the first measurement point (P1), thereby obtaining a first irradiance curve (E_{g2,1}(t)),
• time-resolved detection of the second IR radiation parameter (E_{g2}) at the second measurement point (P2), thereby obtaining a second irradiance curve (E_{g2,2}(t)),
• calculation of a second transit time (τ₂) between the irradiances (E_{g2,1}(t)) (E_{g2,2}(t)), by means of cross-correlation, and
• calculation of the flow velocity (vG) from the first transit time (τ₁) and the second transit time (τ₂).

2. The method according to claim 1, **characterised by** the steps:
filtering out of IR radiation of the gas stream (14) that does not lie within a predetermined first measurement interval (M_{g1}) of 0.3 µm around the first gas excitation wavelength (λ_{g1}) or
a second measurement interval (M_{g2}) of 0.3 µm around the second gas excitation wavelength (λ_{g2}).

3. The method according to any of the preceding claims, **characterised in that**
(a) a first measuring line that extends transversely to the pipe of the gas stream, conducts a first IR radiation bundle from the gas stream to the first IR radiation sensor, and
(b) a second measuring line that extends transversely to the pipe, conducts a second IR radiation bundle from the gas stream to the second IR radiation sensor, the measuring lines being arranged in such a way that the IR radiation bundles form a misalignment angle *φ* of at most 10° and wherein the IR radiation sensors (22.1, 22.2) are arranged so that a maximum diameter of the IR radiation bundle is a maximum of 200 millimetres and at least 1 millimetre and
(c) wherein the IR radiation sensors are arranged at such a distance from the gas stream that the temperature at that point is at most 100°C.

4. A device for measuring a flow velocity of a gas stream (14) with:
(a) a first IR radiation sensor (22.1) for the time-resolved measurement of a first IR radiation parameter (E_{g1}) of IR radiation of the gas stream (14) to obtain a first IR radiation parameter curve (E_{g1,1}(t)) at a first measurement point (P1) outside the gas stream (14) and
for time-resolved detection of a second IR radiation parameter (E_{g2}) in the form of an irradiance at a second gas excitation wavelength (λ_{g2}) at the first measurement point thereby obtaining a first irradiance curve (E_{g2,1}(t)),
(b) a second IR radiation sensor (22.2) for the time-resolved measurement of the IR radiation parameter (E_{g1}) of IR radiation of the gas stream (14) to obtain a second IR radiation parameter curve (E_{g1,2}(t)), and
for time-resolved detection of the second IR radiation parameter (E_{g2}) at the second measurement point (P2), thereby obtaining a second irradiance curve (E_{g2,2}(t)),
(c) an evaluation unit (32) that is designed to automatically
- calculate a transit time (τ1) between the first IR radiation parameter curve (E_{g1,1}(t)) and the second IR radiation parameter curve (E_{g1,2}(t)) by means of cross-correlation and
- calculate the flow velocity (vG) from the transit time (τ1),
(d) wherein the IR radiation sensors (22.1, 22.2) are photoelectric IR radiation sensors (22.1, 22.2),
**characterised in that**
(e) the IR radiation sensors (22.1, 22.2) have a measurement range M whose lower cut-off wavelength (λₘᵢₙ) is at least 0.78 µm and have a measurement frequency (fₘₑₛₛ) of at least 16 kilohertz,
(f) an upper cut-off wavelength (λₘₐₓ) of the measurement range (M) is at most 15 µm and
(g) the evaluation unit (32) is designed to automatically perform a method according to any of the claims 1 to 3.

5. The device according to claim 4, **characterised by**
(a) a first measuring line that extends transversely to the pipe of the gas stream and is designed to conduct a first IR radiation bundle from the gas stream to the first IR radiation sensor, and
(b) a second measuring line that extends transversely to the pipe is designed to conduct a second IR radiation bundle from the gas stream to the second IR radiation sensor,
(c) the measuring lines being arranged in such a way that the IR radiation bundles form a misalignment angle *φ* of at most 10° and
(d) wherein the IR radiation sensors (22.1, 22.2) are arranged so that a maximum diameter of the IR radiation bundle is a maximum of 200 millimetres and at least 1 millimetre.

## Revendications

1. Procédé de mesure d'une vitesse d'écoulement (v) d'un flux de gaz (14), qui est un flux d'un mélange de gaz contenant un premier gaz (g1) et au moins un deuxième gaz (g2),
le premier gaz (g1) ayant une longueur d'onde d'excitation de premier gaz (λ_{g1}) e le deuxième gaz (g2) ayant une longueur d'onde d'excitation de deuxième gaz (λ_{g2}), et
comprenant les étapes consistant à :
(a) mesurer avec résolution temporelle un paramètre de rayonnement IR (E) à un premier emplacement de mesure (P1) à l'extérieur du flux de gaz (14), de manière à obtenir une première courbe de paramètre de rayonnement IR (E_{g1,1}(t)),
(b) mesurer avec résolution temporelle le paramètre de rayonnement IR (E) à un deuxième emplacement de mesure (P2) à l'extérieur du flux de gaz (14), de manière à obtenir une deuxième courbe de paramètre de rayonnement IR (E_{g1,2}(t)),
(c) calculer un temps de parcours (τ₁) à partir de la première courbe de paramètre de rayonnement IR (E_{g1,1}(t)) et de la deuxième courbe de paramètre de rayonnement IR (E_{g1,2}(t)), par corrélation croisée, et
(d) calculer la vitesse d'écoulement (vG) à partir du temps de parcours (τ1),
**caractérisé en ce que**
(e) le flux de gaz
est mené dans un conduit dont les parois émettent un rayonnement de corps noir, et
contient des particules qui émettent un rayonnement de corps noir,
(f) le paramètre de rayonnement IR (E_{g1}) est mesuré par voie photo-électrique à une longueur d'onde (□_{g1}) de 1,5 µm au minimum et de 6 µm au maximum,
(g) une fréquence de mesure (f) est d'au moins 1 kilohertz,
(h) le paramètre de rayonnement IR indique l'irradiance du rayonnement IR du flux de gaz (14) e et une irradiance (E_{g1}) à la longueur d'onde d'excitation de premier gaz (λ_{g1}),
(i) la température (T) du flux de gaz (14) est d'au moins 1000°C et
(j) le procédé comprend les étapes suivantes consistant à:
• détecter en fonction du temps un deuxième paramètre de rayonnement IR (E_{g2}) sous la forme d'une irradiance à la longueur d'onde d'excitation de deuxième gaz (λ_{g2}), au premier emplacement de mesure (P1), de manière à obtenir une première courbe d'irradiance (E_{c2,1}(t)),
• détecter en fonction du temps le deuxième paramètre de rayonnement IR (E_{g2}) au deuxième emplacement de mesure (P2), de manière à obtenir une deuxième courbe d'irradiance (E_{g2,2}(t)),
• calculer un deuxième temps de parcours (τ₂) entre les courbes d'irradiance (E_{g2,1}(t)) (E_{g2,2}(t)), en particulier par corrélation croisée, et
• calculer la vitesse d'écoulement (vG) à partir du premier temps de parcours (τ₁) et du deuxième temps de parcours (T2).

2. Procédé selon la revendication 1, **caractérisé par** les étapes consistant à:
extraire par filtrage le rayonnement IR du flux de gaz (14), qui n'est pas détecté à l'intérieur d'un premier intervalle de mesure prédéfini (M_{g1}) de 0,3 µm autour de la longueur d'onde d'excitation de premier gaz (λ_{g1}), ou d'un deuxième intervalle de mesure (M_{g2}) de 0,3 µm autour de la longueur d'onde d'excitation de deuxième gaz (λ_{g2}) .

3. Procédé selon l'une des revendications précédentes, **caractérisé en ce que**
(a) un premier conduit de mesure s'étendant transversalement au conduit du flux de gaz achemine un premier faisceau de rayonnement IR du flux de gaz au premier capteur de rayonnement IR, et
(b) un deuxième conduit de mesure s'étendant transversalement au conduit achemine un deuxième faisceau de rayonnement IR du flux de gaz au deuxième capteur de rayonnement IR,
les conduits de mesure étant agencés de telle sorte que les faisceaux de rayonnement IR forment entre eux un angle de désalignement φ de 10° au maximum, et les capteurs de rayonnement IR (22.1, 22.2) étant agencés de telle sorte qu'un diamètre maximal des faisceaux de rayonnement IR est de 200 millimètres au maximum et de 1 millimètre au minimum, et
(c) les capteurs de rayonnement IR sont espacés du flux de gaz si loin que la température y est de 100°C au maximum.

4. Dispositif de mesure d'une vitesse d'écoulement d'un flux de gaz (14), comprenant
(a) un premier capteur de rayonnement IR (22.1) pour mesurer avec résolution temporelle un premier paramètre de rayonnement IR (E_{g1}) du rayonnement IR du flux de gaz (14) pour obtenir une première courbe de paramètre de rayonnement IR (E_{g1,1}(t)), e pour mesurer avec résolution temporelle un deuxième paramètre de rayonnement IR (E_{g2}) sous la forme d'une irradiance à la longueur d'onde d'excitation de premier gaz (λ_{g2}) au premier emplacement de mesure (P1) pour obtenir une première courbe d'irradiance (E_{g2,2}(t)),
(b) un deuxième capteur de rayonnement IR (22.2) pour mesurer avec résolution temporelle le paramètre de rayonnement IR (E_{g1}) du rayonnement IR du flux de gaz (14) pour obtenir une deuxième courbe de paramètre de rayonnement IR (E_{g1,2}(t)) e pour mesurer avec résolution temporelle un deuxième paramètre de rayonnement IR (E_{g2}) au deuxième emplacement de mesure pour obtenir une deuxième courbe d'irradiance (E_{g2,2}(t)),
(c) une unité d'évaluation (32) réalisée pour automatiquement
- calculer un temps de parcours (τ₁) entre la première courbe de paramètre de rayonnement IR (E_{g1,1}(t)) et la deuxième courbe de paramètre de rayonnement IR (E_{g1,2}(t)) par corrélation croisée, et
- calculer la vitesse d'écoulement (vG) à partir du temps de parcours (τ1),
(d) des capteurs de rayonnement (22.1, 22.2) sont IR capteurs de rayonnement photoélectriques (22.1, 22.2),
(e) caractérisé en ce queles capteurs de rayonnement IR (22) ayant une plage de mesure M dont la longueur d'onde limite inférieure (λₘᵢₙ) est d'au moins 0,78 µm, et ayant une fréquence de mesure (fₘₑₛₛ) d'au moins 16 kilohertz,
(f) une longueur d'onde limite supérieure (λₘₐₓ) de la plage de mesure (M) étant au plus égale à 15 µm, et
(g) l'unité d'évaluation (32) étant conçue pour mettre en œuvre automatiquement un procédé selon l'une des revendications 1 à 3.

5. Dispositif selon l'une des revendications 4, **caractérisé par**
(a) un premier conduit de mesure s'étendant transversalement au conduit du flux de gaz et réalisé pour acheminer un premier faisceau de rayonnement IR du flux de gaz au premier capteur de rayonnement IR, et
(b) un deuxième conduit de mesure s'étendant transversalement au conduit et réalisé pour acheminer un deuxième faisceau de rayonnement IR du flux de gaz au deuxième capteur de rayonnement IR,
(c) les conduits de mesure étant agencés de telle sorte que les faisceaux de rayonnement IR forment entre eux un angle de désalignement φ de 10° au maximum, et
(d) les capteurs de rayonnement IR (22.1, 22.2) étant agencés de telle sorte qu'un diamètre maximal des faisceaux de rayonnement IR est de 200 millimètres au maximum et de 1 millimètre au minimum.
